# DEMANDE DE BREVET EUROPEEN

(11) **EP 1 449 766 A1**
(43) Date de publication de la demande: **25.08.2004**
(21) Numéro de dépôt: 04290420.1
(22) Date de dépôt: 17.02.2004
(51) Int. Cl.: B64D 27/12, B64D 29/02, B64D 27/26

(54) **Structure porteuse pour un turbopropulseur et ensemble comportant une telle structure porteuse**

(30) Priorité: 19.02.2003 FR 0302000
(71) Demandeur: SNECMA MOTEURS, 75015 Paris (FR)
(72) Inventeur: Picard, Jean-Louis, 77000 Vaux le Penil (FR); Mazeaud, Georges, 91330 Yerres (FR)
(74) Mandataire: Cardy, Sophie

(57) **Abrégé**

La structure porteuse selon l'invention (10) est utilisée pour un turbopropulseur (100) et elle est destinée à être montée sous et/ou à l'avant de l'aile d'un avion.

De façon caractéristique, ladite structure porteuse comporte :
- une partie supérieure (20) comprenant un arceau avant (22), un arceau arrière (24), et des poutres longitudinales (26);
- une partie inférieure (30) amovible, ouverte vers le haut, comprenant au moins deux arceaux inférieurs (32a-32d) et des longerons (34) ;
   ladite partie inférieure (30) étant fixée de manière démontable sur la partie supérieure (20) par des moyens de centrage et de fixation (50, 52, 54), lesdites parties inférieure (30) et supérieure (20) délimitant un logement apte à recevoir ledit turbopropulseur (100), et
- une suspension (40) destinée à porter ledit turbopropulseur (100).

## Description

L'invention concerne une structure porteuse pour un turbopropulseur muni d'une partie avant comprenant une soufflante, d'une partie centrale et d'une partie arrière, destinée à être montée, selon une direction longitudinale, sous et/ou à l'avant de l'aile d'un avion, ladite aile étant équipée d'une armature.

Il est entendu que la présente invention, même si elle est tout particulièrement adaptée pour un turbopropulseur, c'est-à-dire un moteur à réaction dont la turbine actionne une hélice propulsive extérieure, elle peut également s'appliquer à d'autres types de moteurs à réaction.

Egalement, la présente invention se rapporte à la réalisation d'un ensemble comprenant une structure porteuse telle que mentionnée précédemment, une aile d'un avion sur laquelle est fixée ladite structure et un turbopropulseur.

Une telle structure porteuse doit bien évidemment permettre de soutenir le moteur au repos et pendant son fonctionnement. Notamment, il faut que la structure porteuse supporte les forces de poussée du moteur qui doivent en outre être correctement transmises à l'armature de l'avion, en particulier à l'armature des ailes. Egalement, il est important que la structure porteuse ne soit pas déformée par les efforts mécaniques qu'elle supporte ou que l'aile subit, comme les forces de résistance aérodynamique.

Classiquement, ce type de structure porteuse retient le moteur en permettant à ce dernier d'être inséré et retiré par l'avant de la structure porteuse, qui est ouvert.

Il a aussi été proposé de réaliser une structure porteuse sous la forme de deux parties, droite et gauche : cette solution est toutefois mal commode pour ce qui concerne le montage et le démontage du moteur.

En outre, dans les solutions proposées jusqu'alors, il était souvent requis, pour démonter le moteur, ou même pour avoir accès à certains organes de ce moteur, de découpler, au moins partiellement, la structure porteuse de l'aile de l'avion, ce qui rendait ladite opération relativement lourde à réaliser.

Le document US 4 266 741 présente un dispositif de montage pour un turboréacteur à double flux, disposé sous l'aile d'un avion, pour le passage du moteur, lors du montage et du démontage, par le dessous de la structure de support. Cependant, ce dispositif de montage présente un certain nombres d'inconvénients. En particulier, il ne prévoit pas une structure de support formant un ensemble structural à cohésion et résistance mécanique radiales.

La présente invention a pour objectif de fournir une structure porteuse permettant de résister aux différents efforts auxquels elle est soumise, tout en permettant de démonter et remonter de manière simple, sûre et relativement rapide le moteur. En particulier, on recherche à fournir une structure porteuse qui ne doive pas être entièrement démontée pour accéder au moteur lors d'opérations de maintenance et/ou pour retirer le moteur.

A cet effet, selon la présente invention, la structure porteuse est caractérisée en ce qu'elle comporte :
- une partie supérieure destinée à être montée de manière solidaire avec l'armature de ladite aile, ouverte vers le bas, et comprenant un arceau avant, sur lequel ladite partie avant du turbopropulseur est destinée à être suspendue, un arceau arrière, et des poutres longitudinales disposées au moins entre ledit arceau avant et ledit arceau arrière et aptes à s'étendre jusqu'à l'armature de ladite aile, lesdites poutres longitudinales reliant entre eux ledit arceau avant et ledit arceau arrière et étant destinées à être fixées sur l'armature de ladite aile ;
- une partie inférieure amovible, ouverte vers le haut, comprenant au moins deux arceaux inférieurs et des longerons s'étendant suivant la direction longitudinale et reliant entre eux lesdits arceaux inférieurs ;
   ladite partie inférieure étant fixée de manière démontable sur la partie supérieure par des moyens de centrage et de fixation, lesdites parties inférieure et supérieure délimitant un logement apte à recevoir ledit turbopropulseur, et
- une suspension destinée à porter ledit turbopropulseur.

De cette manière, on comprend que par la présence d'une partie supérieure et d'une partie inférieure réalisées à l'aide d'éléments structuraux (arceaux, poutres, longerons.....), on obtient une structure porteuse avec une bonne résistance mécanique pour un poids qui n'est pas trop important.

De plus, le montage et le démontage de la partie inférieure est facilitée par l'utilisation des moyens de centrage et de fixation, ce qui permet d'accéder plus aisément au logement et donc au turbopropulseur.

De préférence, ledit arceau avant et ledit arceau arrière de la partie supérieure sont prolongés chacun, dans un plan vertical, par un arceau inférieur : cette solution privilégie la cohésion structurale à symétrie radiale puisqu'on dispose ainsi, au niveau de l'arceau avant et de l'arceau arrière, d'un élément rigide de contour fermé de forme (pseudo-) circulaire.

De préférence, ladite partie supérieure comprend en outre au moins un arceau intermédiaire monté sur lesdites poutres longitudinales entre ledit arceau avant et ledit arceau arrière, également afin de renforcer la rigidité de la partie supérieure.

Selon une autre disposition avantageuse, ladite partie supérieure comprend en outre un ensemble supérieur d'habillage disposé à l'extérieur depuis l'armature de ladite aile au moins jusqu'audit arceau avant, en laissant une ouverture destinée à être placée dans le prolongement longitudinal de la soufflante du turbopropulseur.

De préférence, ledit ensemble supérieur d'habillage comporte au moins un capot articulé pouvant être ouvert pour accéder audit logement contenant ledit turbopropulseur.

De manière similaire, de préférence, ladite partie inférieure comprend en outre un ensemble inférieur d'habillage disposé à l'extérieur depuis l'armature de ladite aile au moins jusqu'audit arceau avant, en laissant une ouverture destinée à être placée dans le prolongement longitudinal de la soufflante du turbopropulseur.

Selon une disposition préférentielle, lesdits moyens de centrage et de fixation comprennent au moins quatre ensembles de centrage et de fixation disposés dans un plan (P) séparant lesdites partie supérieure et inférieure, chaque ensemble de centrage et de fixation étant équipé d'au moins un pion de centrage et de son creux correspondant, et d'un dispositif d'immobilisation.

Un tel agencement permet d'obtenir un montage simple et rapide entre la partie supérieure et la partie inférieure.

De préférence, ledit dispositif d'immobilisation comporte au moins une vis coopérant avec un filetage et/ou alésage correspondant.

Selon une autre disposition préférentielle, ladite suspension comprend une suspension avant montée sur ledit arceau avant de la partie supérieure. De préférence, ladite suspension avant comprend au moins deux plots fixés de manière symétrique sur ledit arceau avant de la partie supérieure et reliés à ladite partie avant du turbopropulseur par un flasque.

Cette disposition peut se présenter dans une variante dans laquelle ladite suspension comprend une suspension avant montée sur la partie inférieure.

Selon une autre disposition, ladite suspension comprend en outre, sur les poutres longitudinales de la partie supérieure, une suspension arrière destinée à retenir de manière souple la partie arrière du turbopropulseur.

De cette manière, en effet, on réalise également par cette suspension, la retenue du turbopropulseur tout en lui laissant du jeu et une possibilité, limitée, de mouvement par rapport à la structure porteuse objet de la présente invention.

De préférence, ladite suspension arrière comporte deux ensembles disposés de manière symétrique et transversalement à la direction longitudinale, chaque ensemble comprenant une première et une deuxième biellettes et un montant reliant au moins deux poutres longitudinales de la partie supérieure, la première et la deuxième biellettes comprenant une extrémité externe et une extrémité interne, ladite extrémité interne de la première biellette et ladite extrémité interne de la deuxième biellette étant montées sur la partie arrière du turbopropulseur l'une au-dessus de l'autre et lesdites extrémités externes de la première et la deuxième biellettes étant reliées, de préférence l'une à l'autre, et audit montant.

Selon une autre solution, ladite suspension arrière comporte deux ensembles disposés de manière symétrique et transversalement à la direction longitudinale, chaque ensemble comprenant une première et une deuxième biellettes et un support de liaison pivot relié à une poutre longitudinale de la partie supérieure, la première et la deuxième biellettes comprenant une extrémité externe et une extrémité interne, ladite extrémité interne de la première biellette et ladite extrémité interne de la deuxième biellette étant montées sur la partie arrière du turbopropulseur l'une au-dessus de l'autre et lesdites extrémités externes de la première et la deuxième biellettes étant reliées à au moins une des poutres longitudinales de la partie supérieure.

La présente invention porte aussi sur un ensemble comprenant une structure porteuse telle que présentée précédemment, une aile d'un avion sur laquelle est fixée ladite structure et un turbopropulseur disposé dans ledit logement.

D'autres avantages et caractéristiques de l'invention ressortiront à la lecture de la description suivante faite à titre d'exemple et en référence aux dessins annexés dans lesquels :
- la figure 1 montre une vue en perspective de l'extérieur, depuis le côté, l'avant et le dessous, partiellement éclatée, d'une partie latérale d'une structure porteuse selon la présente invention montée sur l'aile d'un avion, et sur laquelle est monté un turbopropulseur ;
- la figure 2 montre une vue en perspective de l'extérieur, depuis le côté, l'avant et le dessus similaire à celle de la figure 1 mais sans le turbopropulseur ;
- la figure 3 est une vue similaire à celle de la figure 2 avec les capots de l'ensemble supérieur d'habillage et de l'ensemble inférieur d'habillage qui sont refermés et selon une variante de réalisation pour l'ensemble supérieur d'habillage ;
- la figure 4 est une vue en perspective de l'intérieur, depuis le côté et l'arrière de la structure porteuse selon la présente invention dans la configuration de la figure 4 ;
- la figure 5 montre de manière schématique la suspension avant ;
- la figure 6 montre de manière schématique la suspension arrière;
- les figures 6A et 6B montrent de manière schématique une variante de réalisation de la suspension arrière ; et
- la figure 7 montre de manière schématique une variante de réalisation de la suspension avant.

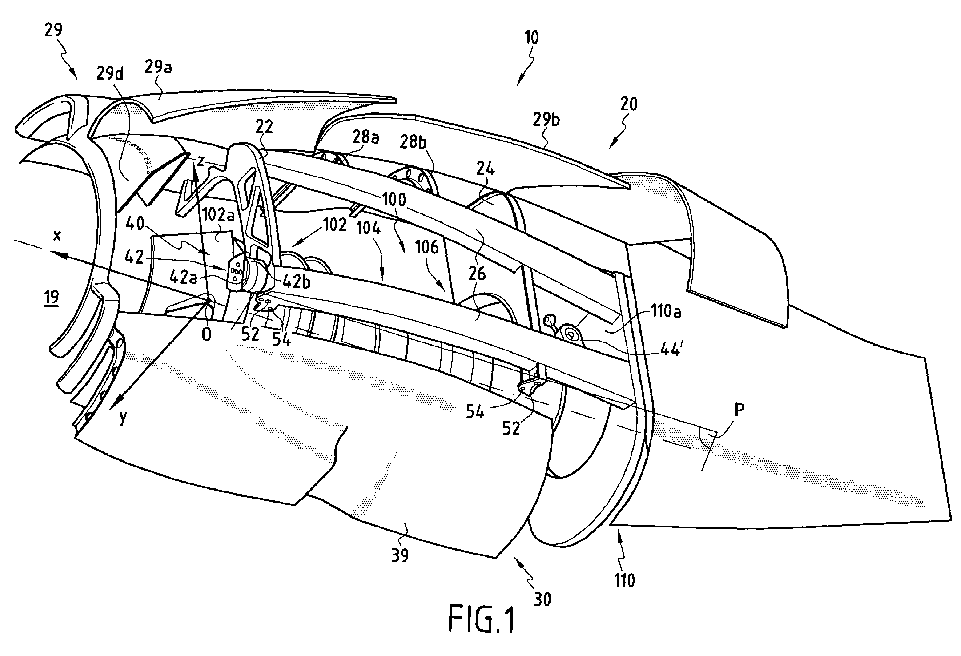

On se référera en premier lieu à la figure 1, sur laquelle la structure porteuse 10 est montrée partiellement depuis l'extérieur.

Sur cette figure 1, est également visible de manière partielle le turbopropulseur 100 composé d'une partie avant 102, d'une partie centrale 104 et d'une partie arrière 106. De manière classique, la partie avant 102 comporte la soufflante 102a, la partie centrale 104 comporte le compresseur et la partie de combustion (non représentés), et la partie arrière 106 comporte une turbine.

Le montage et le démontage de ce turbopropulseur 100 sur la structure porteuse 10 seront explicités plus loin après la présentation des différents éléments composant cette structure porteuse 10.

Sur la figure 1, est également visible une partie de l'aile d'un avion, sous laquelle est positionnée cette structure porteuse 10.

Plus précisément, sur la figure 1 est visible une partie de l'armature 110 de l'aile sous la forme d'un étrier 110a formant un cadre de support pour la structure porteuse 10.

L'aile, qui n'est pas représentée, s'étend selon une direction générale transversale (Oy), tandis que la structure porteuse 10 destinée à recevoir le turbopropulseur 100 s'étend selon une direction longitudinale (Ox), la direction verticale étant repérée par (Oz).

D'une manière générale, la structure porteuse 10 est composée d'un ensemble de poutres structurales formant un ensemble mécanique d'une grande solidité et d'une grande rigidité, tout en permettant d'avoir accès à différentes parties du turbopropulseur 10. Egalement, une autre qualité de cette structure porteuse 10 est son poids puisque l'utilisation de poutres structurelles assure le meilleur rapport rigidité sur poids.

Comme il ressortira de la description qui suit, cette structure porteuse 10 se démarque également en ce qu'elle permet un montage et un démontage simples du turbopropulseur 100 par le bas.

Globalement, la structure porteuse 10 se compose d'une partie supérieure 20, d'une partie inférieure 30 et d'une suspension 40 permettant de relier le turbopropulseur 100 à la structure porteuse 10.

La partie supérieure 20 de la structure porteuse 10 est constituée d'un ensemble de poutres structurelles qui est monté de manière solidaire avec l'armature 110 de l'aile de l'avion.

La partie supérieure 20 de la structure porteuse 10 comporte plusieurs arceaux ouverts vers le bas et disposés d'avant en arrière le long de la direction longitudinale (Ox). En particulier, la partie supérieure 20 comporte un arceau avant 22 et un arceau arrière 24, lesquels présentent une forme générale de U inversé qui s'étend depuis le haut de la partie supérieure 20 jusqu'au bas de la partie supérieure 20 au niveau duquel est délimité un plan de montage P sensiblement horizontal (voir figures 1, 5 et 7).

La partie supérieure 20 comporte également quatre poutres longitudinales 26 (deux d'entre elles seulement étant visibles sur la figure 1). Ces poutres longitudinales 26 s'étendent en direction longitudinale (Ox) depuis l'arceau avant 22 jusqu'à l'étrier 110a sur lequel elles sont fixées, en passant par l'arceau arrière 24.

Ces poutres longitudinales 26 sont situées deux à deux l'une au dessus de l'autre, de part et d'autre du turbopropulseur 100 en formant deux poutres longitudinales supérieures 26 et deux poutres longitudinales inférieures 26.

De plus, parmi les quatre poutres longitudinales 26, on retrouve la symétrie droite-gauche (qui se retrouve globalement pour toute la structure porteuse 10), c'est-à-dire de part et d'autre du plan vertical (xOz), de la partie supérieure 20 et de la partie inférieure 30 de la structure porteuse 10. En effet, deux poutres longitudinales 26 (une poutre longitudinale supérieure et une poutre longitudinale inférieure) sont situées à droite du turbopropulseur 100 et deux poutres longitudinales 26 (une poutre longitudinale supérieure et une poutre longitudinale inférieure) sont situées à gauche du turbopropulseur 100.

Comme on peut le voir sur la figure 1, les deux poutres longitudinales supérieures 26 sont montées de manière fixe sur les extrémités hautes des branches des deux U formés par l'arceau avant 22 et l'arceau arrière 24. Egalement, les deux poutres longitudinales inférieures 26 sont montées de manière fixe sur les extrémités basses des branches des deux U formés par l'arceau avant 22 et l'arceau arrière 24 (c'est-à-dire sur les extrémités libres de l'arceau avant 22 et de l'arceau arrière 24).

L'arceau arrière 24, situé entre l'arceau avant 22 et l'étrier 110a est, tout comme l'arceau avant 22, également fixé sur les quatre poutres longitudinales 26.

Afin de renforcer la rigidité de l'ensemble de la partie supérieure 20, deux arceaux intermédiaires 28a et 28b, ouverts vers le bas et formant chacun un raidisseur, sont situés entre l'arceau avant 22 et l'arceau arrière 24.

Comme il ressort de la figure 1, ces arceaux intermédiaires 28a et 28b en forme de U inversé s'étendent depuis le haut de la partie supérieure 20 jusqu'aux deux poutres longitudinales 26 supérieures. Il est bien entendu que l'on peut également prévoir que l'extrémité de ces arceaux intermédiaires 28a et 28b s'étend jusqu'aux deux poutres longitudinales 26 inférieures (cas de figure non représenté).

Pour compléter et habiller la partie supérieure 20, cette dernière comprend en outre un ensemble supérieur d'habillage 29 comportant des parties fixes et des parties mobiles.

Cet ensemble supérieur d'habillage 29 entoure complètement la partie supérieure 20 et donc la partie haute du turbopropulseur 100, tout en laissant toutefois une ouverture circulaire 19 dans le prolongement longitudinal de l'ouverture de la soufflante 102a.

En particulier, les parties mobiles de l'ensemble supérieur d'habillage 29 comportent un premier capot articulé 29a, situé à l'avant (complètement à gauche sur les figures 1, 2 et 3), et un deuxième capot articulé 29b, situé derrière, permettant l'accès aux différentes parties du turbopropulseur 100.

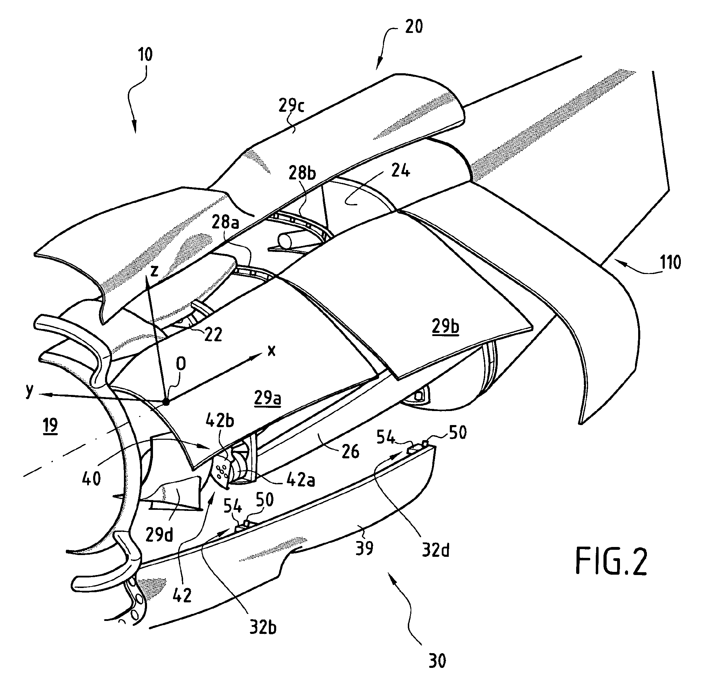

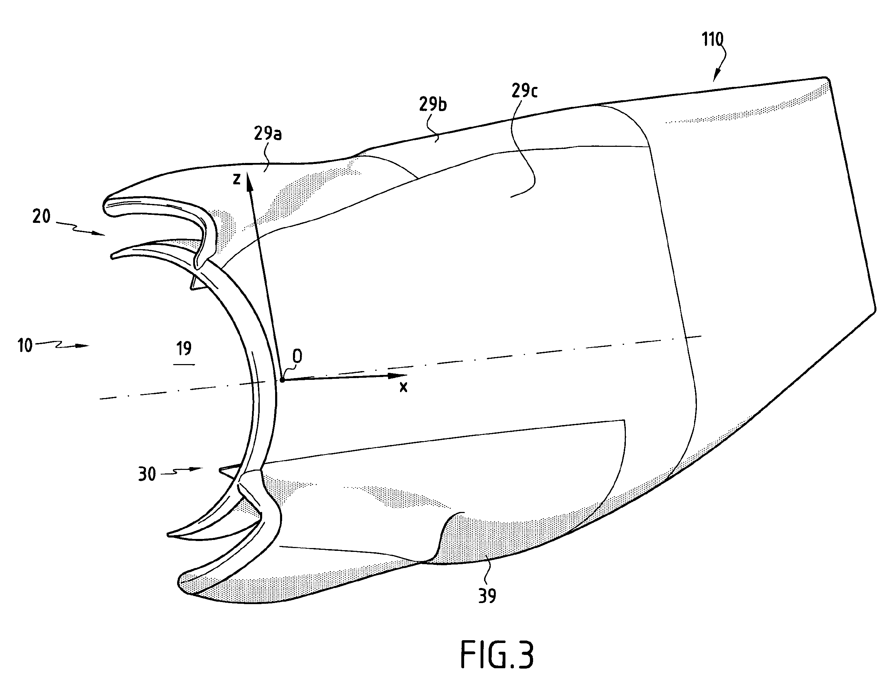

Les parties fixes de l'ensemble supérieur d'habillage 29 comportent notamment le capot fixe 29c visible sur les figures 2 et 3, et qui s'étend longitudinalement sur pratiquement toute la longueur de la structure porteuse 10, à côté des premier et deuxième capots articulés 29a et 29b.

Selon une première variante représentée sur les figures 1 et 2, lorsque l'on regarde la structure porteuse 10 depuis l'ouverture 19, les premier et deuxième capots articulés 29a et 29b sont situés à droite du capot fixe 29c.

Selon une deuxième variante représentée sur la figure 3, lorsque l'on regarde la structure porteuse 10 depuis l'ouverture 19, les premier et deuxième capots articulés 29a et 29b sont situés à gauche du capot fixe 29c.

On peut noter que l'ensemble supérieur d'habillage 29 s'étend à l'extérieur des poutres structurelles 22, 24, 26, 28a, 28b de la partie supérieure 20, depuis une zone située à l'avant de la soufflante 102a du turbopropulseur 100 jusqu'à une zone située à l'arrière de la partie arrière 106 du turbopropulseur 100, en particulier jusqu'à l'étrier 110a ; l'armature 110 de l'aile étant elle-même revêtue d'un habillage qui lui est propre.

Comme on peut le voir sur les figures 1 et 2, le capot articulé 29a situé à l'avant de la partie supérieure 20 et le capot articulé 29b situé à l'arrière de la partie supérieure 20 sont réalisés sous la forme d'un panneau articulé par une charnière longitudinale qui permet le pivotement de ces capots entre une position fermée et une position ouverte.

Egalement, on peut voir sur les figures 1 et 2 une autre portion de l'ensemble supérieur de l'habillage 29, composée du capot 29d, qui est située de manière adjacente à l'ouverture 19 et qui est conformée pour faciliter l'entrée de l'air en direction de la soufflante 102a.

Comme on peut le voir sur les figures 1 et 2, la partie inférieure 30 de la structure porteuse 10 est ouverte vers le haut afin de former, avec la partie supérieure 20, un logement permettant la réception et la fixation du turbopropulseur 100 en l'entourant complètement.

Selon une autre particularité de l'invention, la partie inférieure 30 est amovible puisqu'elle est reliée de manière démontable à la partie supérieure 20.

La partie inférieure 30 comporte en particulier quatre arceaux inférieurs 32a, 32b, 32c et 32d, en forme de U ouverts vers le haut et situés l'un derrière l'autre le long de la direction longitudinale (Ox), et des longerons 34, préférentiellement au nombre de deux.

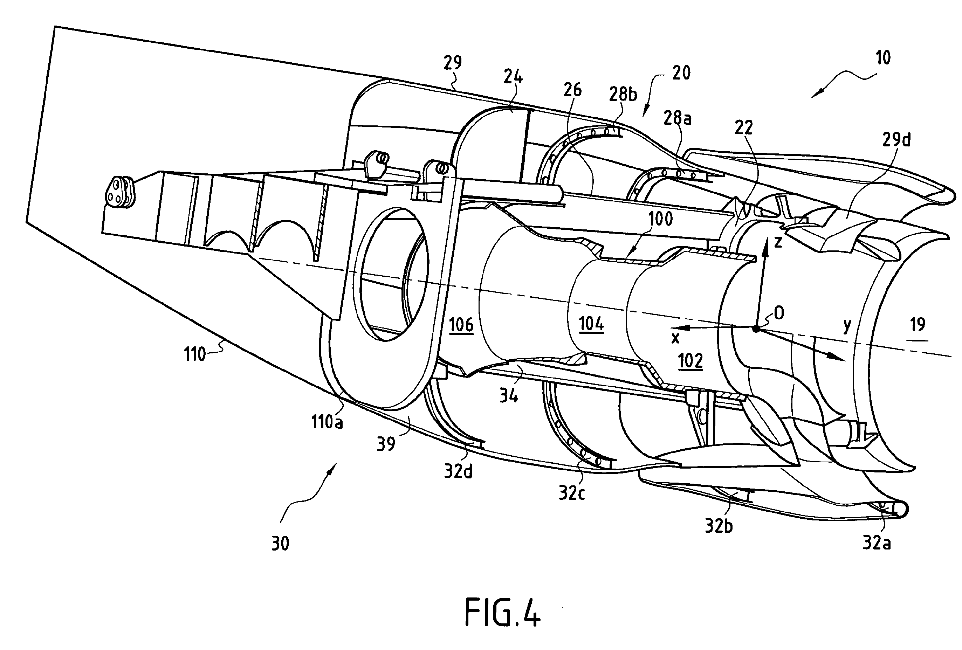

Comme il apparaît sur la figure 4, l'arceau inférieur 32d situé le plus à gauche (à l'arrière par rapport à l'ouverture 19 qui est à l'avant) se trouve dans le même plan vertical que l'arceau arrière 24 de la partie supérieure 20, tandis que l'arceau inférieur 32a situé le plus à droite (à l'avant) constitue l'élément structurel situé le plus en avant, au niveau de l'ouverture 19, et à l'avant du plan de l'arceau avant 22 de la partie supérieure 20.

Afin de renforcer au mieux la cohésion mécanique de la structure porteuse 10, comme il ressort de la figure 4, il y a deux autres arceaux inférieurs 32b et 32c situés à gauche (à l'arrière) de l'arceau inférieur 32a, et à droite (à l'avant) de l'arceau inférieur 32d qui est situé dans le même plan vertical que l'arceau arrière 24 de la partie supérieure 20.

De manière remarquable, l'arceau inférieur 32b est situé dans le même plan vertical que l'arceau avant 22 de la partie supérieure 20.

Les deux plans pré-cités (ceux de l'arceau avant 22 et de l'arceau arrière 24) de la partie supérieure 20 délimitent en fait des plans verticaux de montage permettant de relier, de manière amovible, la partie inférieure 30 à la partie supérieure 20.

Plus précisément, comme il ressort de la figure 2, les extrémités supérieures des arceaux inférieurs 32b et 32d sont équipées chacune d'un spigot ou pion 50 destiné à coopérer avec un creux correspondant 52 situé à l'extrémité inférieure des arceaux avant et arrière 22, 24 (voir figure 1). En outre, chacune des extrémités des arceaux avant 22, arceaux arrière 24, et des arceaux inférieurs 32b et 32d est équipée de deux alésages 54 (voir figure 1).

Les deux paires d'alésages 54 des deux extrémités inférieures (respectivement droite et gauche) de l'arceau avant 22 sont destinées à venir se positionner en regard des deux paires d'alésage des deux extrémités supérieures (respectivement droite et gauche) de l'arceau inférieur 32b.

De la même manière, les deux paires d'alésages 54 des deux extrémités inférieures (respectivement droite et gauche) de l'arceau arrière 24 de la partie supérieure 20 sont destinées à venir se placer en correspondance et en regard avec les deux paires d'alésages 54 des extrémités supérieures (respectivement droite et gauche) de l'arceau inférieur 32d le long du plan de montage P.

Le plan de montage P est horizontal ou sensiblement horizontal et il est confondu avec le diamètre horizontal du moteur 100, ou ce plan P est relativement proche mais en dessous du diamètre horizontal du moteur 100.

Plus précisément, la section des arceaux avant 22 et arrière 24 s'étend sur un angle au centre variant entre 180° et 240°, de préférence de l'ordre de 210°.

De l'agencement précité des paires d'alésages 54, on comprend que le blocage de la partie inférieure 30 sur la partie supérieure 20 est effectué au moyen de quatre paires de vis (non représentées) venant se loger une à une dans les paires d'alésages 54 en regard pré-citées et visibles sur les figures 1 et 2.

On comprend que les pions 50 réalisent le centrage de la partie inférieure 30 par rapport à la partie supérieure 20, grâce aux creux 52, et qui permettent, en outre, le transfert du couple et le passage des efforts entre la partie inférieure 30 et la partie supérieure 20.

La partie inférieure 30 comporte, en outre, un ensemble inférieur d'habillage 39 qui est réalisé ici sous la forme d'un capot fixe. Il est entendu que l'on peut également envisager la réalisation de cet ensemble inférieur d'habillage 39 en plusieurs parties avec un ou plusieurs capots articulés, comme il a été précédemment décrit en relation avec la partie supérieure 20.

La fixation et la retenue du turbopropulseur 100 sur la structure porteuse 10 vont maintenant être explicitées en regard des figures 1, 2 et 5 à 7.

En particulier, cette fixation est réalisée au moyen d'une suspension 40 comportant une suspension avant 42 et une suspension arrière 44.

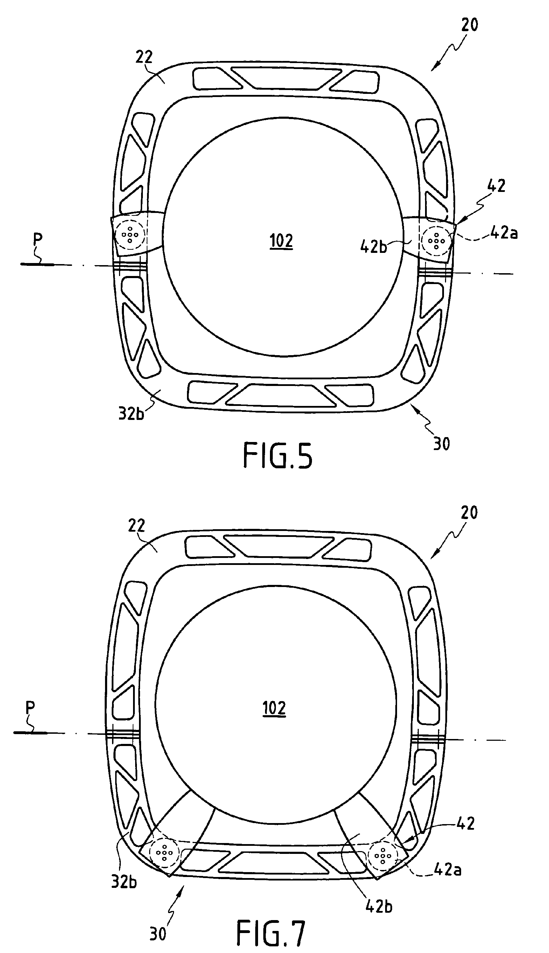

La suspension avant 42 est représentée de manière schématique sur la figure 5 : le turbopropulseur 100 est monté de manière rigide sur l'arceau avant 22 de la partie supérieure 20 au moyen de deux plots de fixation 42a sur chacun desquels est monté un flasque 42b, lui-même relié à la partie avant 102 du turbopropulseur 100. Cette suspension avant 42 formée de l'ensemble comprenant les deux plots de fixation 42a et les deux flasques 42b, constitue un ensemble rigide qui retient le turbopropulseur 100, en particulier sa partie avant 102, dans le logement formé par la structure porteuse 10.

Il est entendu qu'on peut prévoir (forme de réalisation non illustrée) plus de deux plots de fixation 42a ; de préférence, on utilise un nombre pair de plots de fixation 42a, afin de conserver la symétrie droite-gauche.

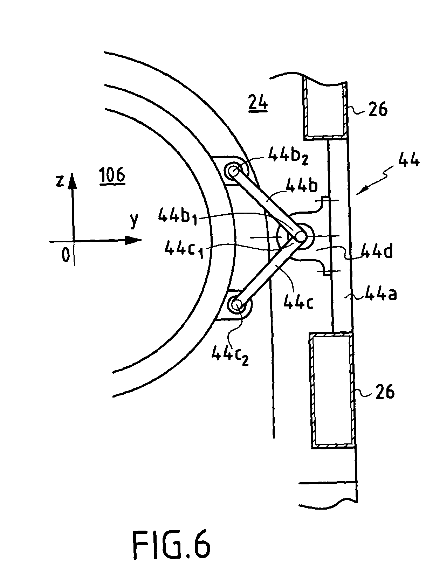

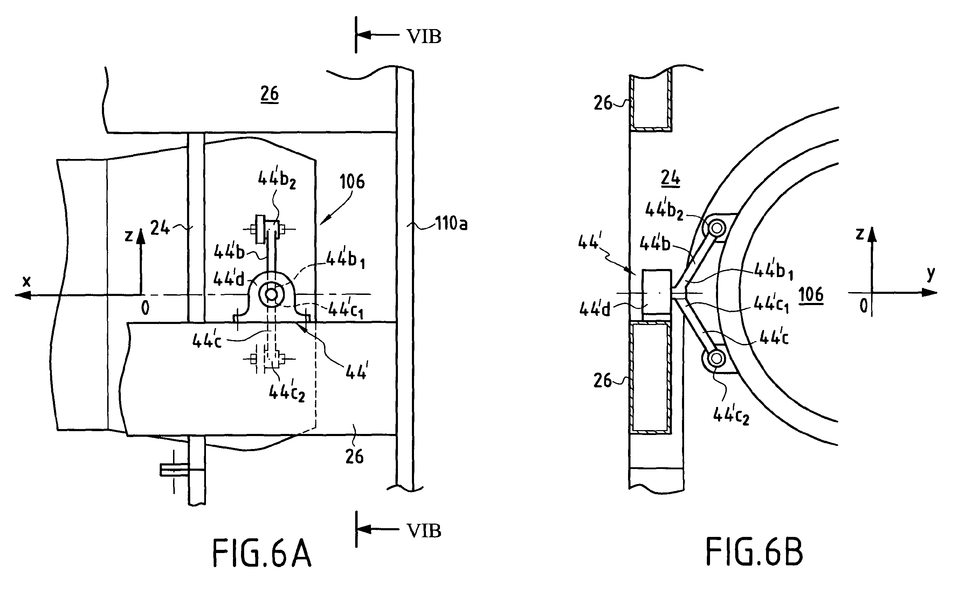

La suspension arrière 44 visible de manière schématique sur la figure 6 comporte, à droite et à gauche de la partie arrière 106 du turbopropulseur 100, un ensemble comportant un montant 44a reliant entre elles les deux poutres longitudinales 26, une première biellette 44b, une deuxième biellette 44c et un support de liaison pivot 44d monté sur le montant 44a.

En particulier, la première biellette 44b est située au dessus de la deuxième biellette 44c, ces deux biellettes 44b, 44c ayant une extrémité externe 44b₁ et 44c₁ qui est montée de manière pivotante sur le support de liaison pivot 44d, alors que des extrémités internes 44b₂ et 44c₂ des première et deuxième biellettes 44b, 44c sont fixées par une liaison élastique sur la partie arrière 106 du turbopropulseur, l'une au dessus de l'autre.

Selon une autre solution, on réalise la suspension arrière 44' grâce à une variante de montage illustrée sur les figures 6A et 6B, respectivement depuis le côté et en demi-coupe selon la direction VIB-VIB de la figure 6A.

Dans ce cas, la suspension arrière 44' est également symétrique par rapport au plan vertical longitudinal (xOz) de façon à respecter la symétrie droite gauche. La suspension arrière 44' est formée, à droite et à gauche, d'un ensemble comportant une première biellette 44'b, une deuxième biellette 44'c et un support de liaison pivot 44'd monté directement sur la face supérieure de la poutre longitudinale inférieure 26 (voir figures 6B et 1). On peut prévoir (cas de figure non illustré) de monter le support de liaison pivot 44'd plutôt sur la face inférieure de la poutre longitudinale supérieure 26.

Ici, de manière plus précise, la première biellette 44'b est située au dessus de la deuxième biellette 44'c, ces deux biellettes 44'b, 44'c ayant une extrémité externe 44'b₁ et 44'c₁ qui est montée de manière pivotante sur le support de liaison pivot 44'd, alors que des extrémités internes 44'b₂ et 44'c₂ des première et deuxième biellettes 44'b, 44'c sont fixées par une liaison élastique sur la partie arrière 106 du turbopropulseur, l'une au dessus de l'autre, comme on peut le voir sur la figure 6B.

De cette manière, on comprend que la suspension avant 42 est rigide, tandis que la suspension arrière 44 est souple, grâce à la liaison élastique précitée.

Pour effectuer la pose et la dépose du turbopropulseur 100, on installe des palans au dessus de la partie supérieure 20. Ensuite, on effectue la séparation entre la partie inférieure 30 et le reste de la structure porteuse 10 en désaccouplant les huit vis logées dans les alésages 54 et en retirant la partie inférieure 30.

Ensuite, il faut désolidariser le turbopropulseur 100 de la suspension avant 42 (flasque 42b) et de la suspension arrière 44 (biellettes 44b et 44c) avant de pouvoir libérer le turbopropulseur.

Selon une autre solution particulièrement avantageuse de la présente invention, on réalise la suspension avant 42 selon la variante illustrée sur la figure 7.

Dans ce cas, les plots de fixation 42a sont montés sur l'arceau inférieur 32b de la partie inférieure 30. De cette manière, après avoir désaccouplé les huit vis reliant la partie supérieure 20 et la partie inférieure 30 selon le plan de montage P, et après avoir démontée la suspension arrière 44, le retrait du turbopropulseur 100 s'effectue en même temps que la partie inférieure 30 qui lui sert alors de berceau de transfert.

On comprend que cette dernière solution est également avantageuse en ce qu'elle facilite le centrage des flasques 42b sur les plots de fixation 42a, cette opération étant effectuée alors que la partie inférieure 30 n'est pas encore reliée à la partie supérieure 20.

## Revendications

1. Structure porteuse (10) pour un turbopropulseur (100) muni d'une partie avant (102) comprenant une soufflante (102a), d'une partie centrale (104) et d'une partie arrière (106), destinée à être montée, selon une direction longitudinale (Ox), sous et/ou à l'avant de l'aile d'un avion, ladite aile étant équipée d'une armature (110), **caractérisée en ce qu'**elle comporte :
- une partie supérieure (20) destinée à être montée de manière solidaire avec l'armature (110) de ladite aile, ouverte vers le bas, et comprenant un arceau avant (22), sur lequel ladite partie avant (102) du turbopropulseur est destinée à être suspendue, un arceau arrière (24), et des poutres longitudinales (26) disposées au moins entre ledit arceau avant (22) et ledit arceau arrière (24) et aptes à s'étendre jusqu'à l'armature de ladite aile, lesdites poutres longitudinales (26) reliant entre eux ledit arceau avant (22) et ledit arceau arrière (24) et étant destinées à être fixées sur l'armature (110) de ladite aile ;
- une partie inférieure (30) amovible, ouverte vers le haut, comprenant au moins deux arceaux inférieurs (32a, 32b, 32c, 32d) et des longerons (34) s'étendant suivant la direction longitudinale et reliant entre eux lesdits arceaux inférieurs (32a, 32b, 32c, 32d) ;
ladite partie inférieure (30) étant fixée de manière démontable sur la partie supérieure (20) par des moyens de centrage et de fixation (50, 52, 54), lesdites parties inférieure (30) et supérieure (20) délimitant un logement apte à recevoir ledit turbopropulseur (100), et
- une suspension (40) destinée à porter ledit turbopropulseur (100).

2. Structure porteuse selon la revendication 1, **caractérisée en ce que** ledit arceau avant (22) et ledit arceau arrière (24) de la partie supérieure (20) sont prolongés chacun, dans un plan vertical, par un arceau inférieur (32b, 32d) .

3. Structure porteuse selon la revendication 1 ou 2, **caractérisée en ce que** ladite partie supérieure (20) comprend en outre au moins un arceau intermédiaire (28a, 28b) monté sur lesdites poutres longitudinales (26) entre ledit arceau avant (22) et ledit arceau arrière (24).

4. Structure porteuse selon l'une quelconque des revendications précédentes, **caractérisée en ce que** ladite partie supérieure (20) comprend en outre un ensemble supérieur d'habillage (29) disposé à l'extérieur depuis l'armature (110) de ladite aile au moins jusqu'audit arceau avant (22), en laissant une ouverture (19) destinée à être placée dans le prolongement longitudinal de la soufflante (102) du turbopropulseur (100).

5. Structure porteuse selon la revendication 4, **caractérisée en ce que** ledit ensemble supérieur d'habillage (29) comporte au moins un capot articulé (29a, 29b) pouvant être ouvert pour accéder audit logement contenant ledit turbopropulseur (100).

6. Structure porteuse selon l'une quelconque des revendications précédentes, **caractérisée en ce que** ladite partie inférieure (30) comprend en outre un ensemble inférieur d'habillage (39) disposé à l'extérieur depuis l'armature (110) de ladite aile au moins jusqu'audit arceau avant (22), en laissant une ouverture (19) destinée à être placée dans le prolongement longitudinal de la soufflante (102a) du turbopropulseur (100).

7. Structure porteuse selon l'une quelconque des revendications précédentes, **caractérisée en ce que** lesdits moyens de centrage et de fixation comprennent au moins quatre ensembles de centrage et de fixation disposés dans un plan (P) séparant lesdites partie supérieure et inférieure (20, 30), chaque ensemble de centrage et de fixation étant équipé d'au moins un pion de centrage (50) et de son creux correspondant (52), et d'un dispositif d'immobilisation (54).

8. Structure porteuse selon la revendication 7, **caractérisée en ce que** ledit dispositif d'immobilisation (54) comporte au moins une vis coopérant avec un filetage et/ou alésage correspondant.

9. Structure porteuse selon l'une quelconque des revendications précédentes, **caractérisée en ce que** ladite suspension (40) comprend une suspension avant (42) montée sur ledit arceau avant (22) de la partie supérieure (20).

10. Structure porteuse selon la revendication 9, **caractérisée en ce que** ladite suspension avant (42) comprend au moins deux plots (42a) fixés de manière symétrique sur ledit arceau avant (22) de la partie supérieure (20) et reliés à ladite partie avant (102) du turbopropulseur (100) par un flasque (42b).

11. Structure porteuse selon l'une quelconque des revendications précédentes, **caractérisée en ce que** ladite suspension (40) comprend une suspension avant (42) montée sur la partie inférieure (30).

12. Structure porteuse selon l'une quelconque des revendications précédentes, **caractérisée en ce que** ladite suspension (40) comprend en outre, sur les poutres longitudinales (26) de la partie supérieure (20), une suspension arrière (44) destinée à retenir de manière souple la partie arrière (106) du turbopropulseur (100).

13. Structure porteuse selon la revendication 12, **caractérisée en ce que** ladite suspension arrière (44) comporte deux ensembles disposés de manière symétrique et transversalement à la direction longitudinale (Ox), chaque ensemble comprenant une première et une deuxième biellettes (44b, 44c) et un montant (44a) reliant au moins deux poutres longitudinales (26) de la partie supérieure (20), la première et la deuxième biellettes (44b, 44c) comprenant une extrémité externe (44b₁, 44c₁) et une extrémité interne (44b₂, 44c₂), ladite extrémité interne (44b₂) de la première biellette (44b) et ladite extrémité interne (44c₂) de la deuxième biellette (44c) étant montées sur la partie arrière (106) du turbopropulseur (100) l'une au-dessus de l'autre et lesdites extrémités externes (44b₁, 44c₁) de la première et la deuxième biellettes (44b, 44c) étant reliées audit montant (44a).

14. Structure porteuse selon la revendication 12, **caractérisée en ce que** ladite suspension arrière (44') comporte deux ensembles disposés de manière symétrique et transversalement à la direction longitudinale (Ox), chaque ensemble comprenant une première et une deuxième biellettes (44'b, 44'c) et un support de liaison pivot (44'd) relié à une poutre longitudinale (26) de la partie supérieure (20), la première et la deuxième biellettes (44'b, 44'c) comprenant une extrémité externe (44'b₁, 44'c₁) et une extrémité interne (44'b₂, 44'c₂), ladite extrémité interne (44'b₂) de la première biellette (44'b) et ladite extrémité interne (44'c₂) de la deuxième biellette (44'c) étant montées sur la partie arrière (106) du turbopropulseur (100) l'une au-dessus de l'autre et lesdites extrémités externes (44'b₁, 44'c₁) de la première et la deuxième biellettes (44'b, 44'c) étant reliées à au moins une des poutres longitudinales (26) de la partie supérieure (20).

15. Ensemble comprenant une structure (10) selon l'une quelconque des revendications précédentes, une aile d'un avion sur laquelle est fixée ladite structure (10) et un turbopropulseur (100) disposé dans ledit logement.
